# EUROPEAN PATENT SPECIFICATION

(11) **EP 4 654 397 B1**
(45) Date of publication and mention of the grant of the patent: **12.08.2026**
(21) Application number: 25166855.4
(22) Date of filing: 27.03.2025
(51) Int. Cl.: H01R 13/443, H01R 13/11, B60L 53/16, B60L 3/00, B60L 3/04

(54) **CONNECTOR**
VERBINDER
CONNECTEUR

(30) Priority: 23.05.2024 JP 2024083761
(43) Date of publication of application: 26.11.2025
(73) Proprietor: Japan Aviation Electronics Industry, Limited, Tokyo 150-0043 (JP)
(72) Inventor: KUGO, Kazuki, Tokyo, 150-0043 (JP)
(74) Representative: Prüfer & Partner mbB Patentanwälte · Rechtsanwälte

(56) References cited:
- WO-A1-2024/056442
- CN-A- 115 101 959
- US-A1- 2022 384 973

## Description

### BACKGROUND OF THE INVENTION

This invention relates to a connector comprising an electric-shock protection pin.

For example, US 2022/384973 A1 discloses a male and female power terminal assembly including a male terminal having a male contact portion including an outer contact surface and an inner surface, and a female terminal having a female contact portion including a sleeve and a finger made of an electrically conductive material. The outer contact surface is electrically connected to an inner surface of the sleeve. Further, the male terminal includes a connecting member made of an electrically conductive material which is placed inside a cylindrical hollow portion of the male terminal, and which interconnects the finger with the inner surface.

WO 2024/056442 A1 discloses an electrical connector assembly comprising a pin element having a pin with an outer contact surface and a guide opening extending into said pin, and a socket element having a socket opening with an inner contact surface and a guide pin located at least partly in said socket opening, wherein during a plug in process between the pin element and the socket element, said pin can be introduced into the socket opening and an electrical contact between the outer contact surface and the inner contact surface can be established, and wherein during the plug in process the guide pin is guided into the guide opening such that the relative movement between the pin element and the socket element can be guided by the guide pin and the guide opening.

CN 115 101 959 A discloses an energy storage connector comprising a socket and a plug, the socket comprises a pin and a shell, the pin is of a hollow structure, the shell sleeves the pin, and a first annular gap is arranged between the pin and the shell; the plug comprises a shell, a right-angle wire nose, an anti-touch rod, an inner reed and an outer reed, the shell is of a right-angle bent pipe structure, the right-angle wire nose is inserted into the other through hole of the shell along one through hole of the shell, the anti-touch rod is inserted into the other through hole of the shell to be fixedly connected with the right-angle wire nose, a protruding block is arranged on the outer wall of the inner reed, and a plurality of first elastic pieces are arranged at the two ends of the inner reed. A clamping hole is formed in the outer wall of the outer reed, a plurality of second elastic pieces are arranged at the two ends of the outer reed respectively, the outer reed is arranged outside the inner reed in a sleeving mode to form a contact piece, the contact piece is arranged on the right-angle line nose in a sleeving mode, the anti-touch rod is arranged at the axis position of the contact piece, and a second annular gap is formed between the contact piece and the other through hole of the shell. The invention provides an energy storage connector which can meet the high-current-carrying charging requirement and is simple in structure and safe.

Further, above mentioned type of connector is disclosed in JP H08-78079 A (Patent Document 1).

Referring to Fig. 16, Patent Document 1 discloses a receptacle (connector) 90 mateable with a plug (mating connector) 97, which is located forward of the connector 90, along a front-rear direction (X-direction). Thus, the mating direction of the illustrated connector 90 is the front-rear direction.

The connector 90 comprises a socket contact (contact) 92 for a large current and an insulation pole (electric-shock protection pin) 96. The contact 92 is covered by an insulation member in a plane perpendicular to the front-rear direction. The contact 92 is formed with a receiving portion 94 located therein. The receiving portion 94 is a space which opens forward. The mating connector 97 comprises a pin contact (mating contact) 98. The mating contact is formed with a hole portion 99.

The electric-shock protection pin 96 is located in the receiving portion 94 and extends to a front end of the receiving portion 94 along the front-rear direction. The thus-arranged electric-shock protection pin 96 makes it difficult for an operator to insert his/her finger into the receiving portion 94. This structure prevents an electric-shock which might be caused when an operator's finger is brought into contact with the contact 92.

When the connector 90 and the mating connector 97 are mated with each other, the electric-shock protection pin 96 is received in the hole portion 99 of the mating contact 98 so that the electric-shock protection pin 96 is restricted in its movement. The connector 90 is moved so as to be inclined with the front-rear direction when receiving a force along a direction intersecting with the mating direction (front-rear direction) under a state where the electric-shock protection pin 96 has been received in the hole portion 99. If the connector 90 is excessively inclined, the electric-shock protection pin 96 received in the hole portion might be plastically deformed into a bent shape.

### SUMMARY OF THE INVENTION

It is therefore an object of the present invention to provide a connector comprising an electric-shock protection pin which is hardly deformed plastically even when the connector receives a force along a direction intersecting with a mating direction.

The object of the present invention is achieved by the connector as defined by claim 1.

According to the electric-shock protection pin of the present invention, when the end portion is moved in a direction perpendicular to the front-rear direction (mating direction), the support portion is not plastically deformed but makes the end portion return to the predetermined position by using the restoring force caused by its resilient deformation. According to this mechanism, the electric-shock protection pin is not plastically deformed but is resiliently deformed, for example, even when the connector is inclined by a force applied thereto along a direction intersecting with the front-rear direction (mating direction) under a state where the connector and the mating connector are mated with each other. Thus, the present invention provides a connector comprising an electric-shock protection pin which is hardly deformed plastically even when the connector receives a force along a direction intersecting with a mating direction.

An appreciation of the objectives of the present invention and a more complete understanding of its configuration may be had by studying the following description of the preferred embodiment and by referring to the accompanying drawings.

### BRIEF DESCRIPTION OF THE DRAWINGS

Fig. 1 is a perspective view showing a connector and a mating connector according to an embodiment of the present invention, wherein the connector and the mating connector are under a separated state where they are separated from each other.
Fig. 2 is a side view showing the connector and the mating connector of Fig. 1, wherein the connector and the mating connector are under a mated state where they are mated with each other, and an outline of a housing under a state where the connector is inclined is illustrated with dashed line.
Fig. 3 is a front view showing a mating portion of the connector of Fig. 1.
Fig. 4 is a front view showing the connector and the mating connector of Fig. 1.
Fig. 5 is a cross-sectional view showing the connector and the mating connector of Fig. 4, taken along line V-V.
Fig. 6 is a cross-sectional view showing a contact, an electric-shock protection pin and a part of the housing of the connector of Fig. 5, wherein an outline of the resiliently deformed electric-shock protection pin is illustrated with dashed line.
Fig. 7 is a cross-sectional view showing the contact and the electric-shock protection pin of Fig. 6 under the mated state, wherein outlines of the contact and the electric-shock protection pin under a state where the connector is inclined are illustrated with dashed line.
Fig. 8 is a perspective view showing the contact and the electric-shock protection pin of Fig. 6.
Fig. 9 is an exploded, perspective view showing the contact and the electric-shock protection pin of Fig. 8.
Fig. 10 is a front view showing the contact and the electric-shock protection pin of Fig. 9.
Fig. 11 is a cross-sectional view showing the contact and the electric-shock protection pin of Fig. 10, taken along line XI-XI, wherein a part of the electric-shock protection pin enclosed by dashed line is enlarged and illustrated.
Fig. 12 is a perspective view showing a modification of the contact and the electric-shock protection pin of Fig. 8.
Fig. 13 is an exploded, perspective view showing the contact and the electric-shock protection pin of Fig. 12, wherein an additional member of the contact is enlarged and illustrated.
Fig. 14 is a front view showing the contact and the electric-shock protection pin of Fig. 12.
Fig. 15 is a cross-sectional view showing the contact and the electric-shock protection pin of Fig. 14, taken along line XV-XV.

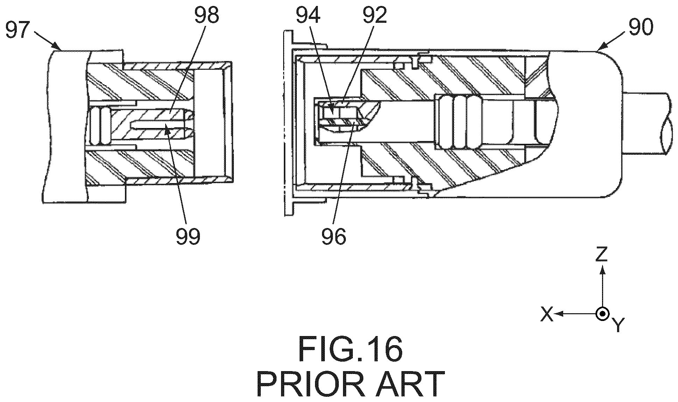

Fig. 16 is a cross-sectional view showing a connector and a mating connector of Patent Document 1.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

### DETAILED DESCRIPTION

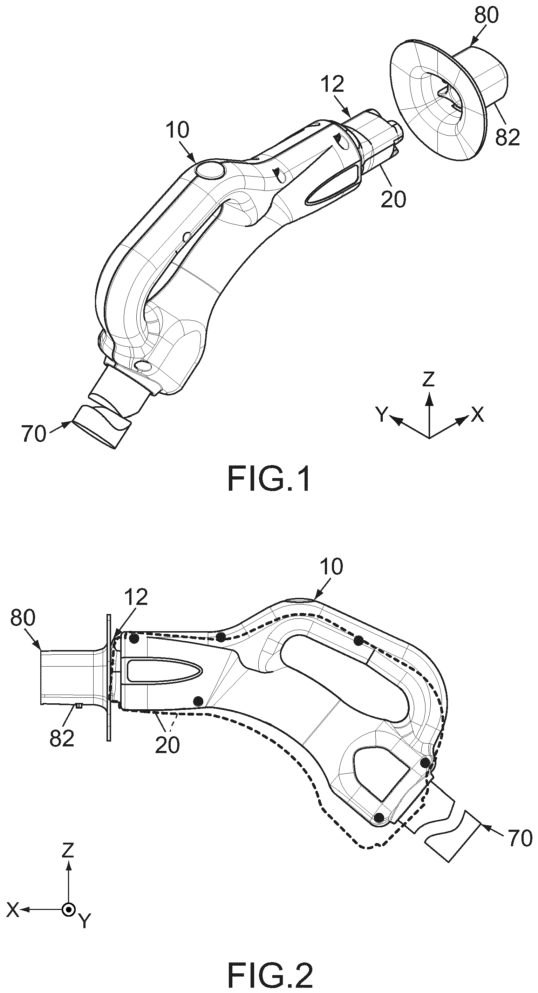

Referring to Figs. 1 and 2, a connector 10 according to an embodiment of the present invention is mateable with a mating connector 80, which is located forward of the connector 10, along a front-rear direction. Thus, the mating direction of the present embodiment is the front-rear direction. The connector 10 and the mating connector 80 shown in Fig. 1 are under a separated state where they are separated from each other. The connector 10 and the mating connector 80 shown in Fig. 2 are under a mated state where they are mated with each other. The front-rear direction of the present embodiment is the X-direction. In the present embodiment, "forward" means the positive X-direction, and "rearward" means the negative X-direction. The words such as the front-rear direction do not indicate the absolute positional relation relative to the ground but merely indicate a relative positional relation under a definition that the mating connector 80 under the mated state is located forward of the connector 10.

The connector 10 of the present embodiment is a charging connector. The connector 10 is connected to a charging device (not shown) via a cable 70. The mating connector 80 is incorporated in an electric vehicle (not shown) such as an electric car. The connector 10 supplies a large current to the mating connector 80 through the cable 70 under the mated state. However, the present invention is not limited thereto but is variously applicable.

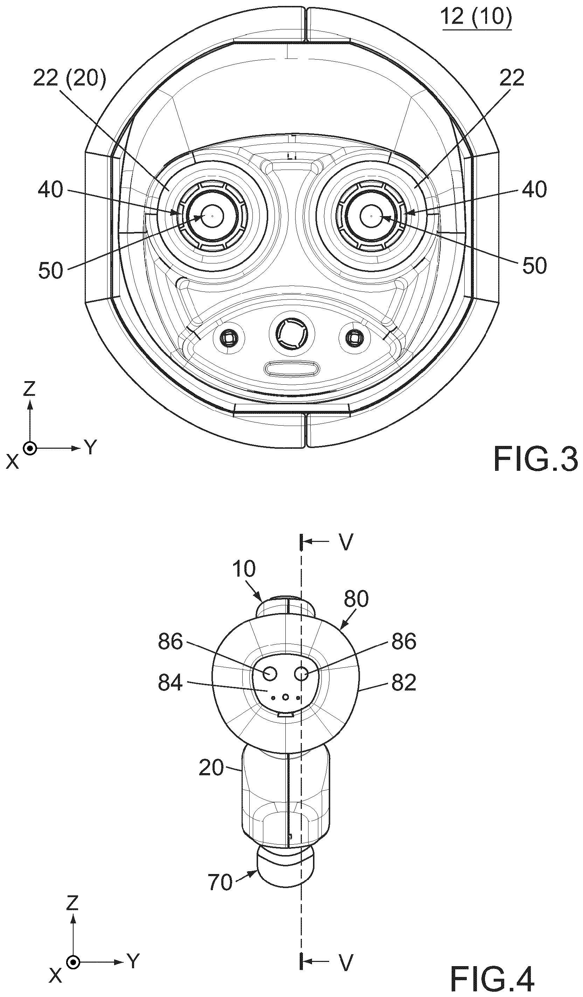

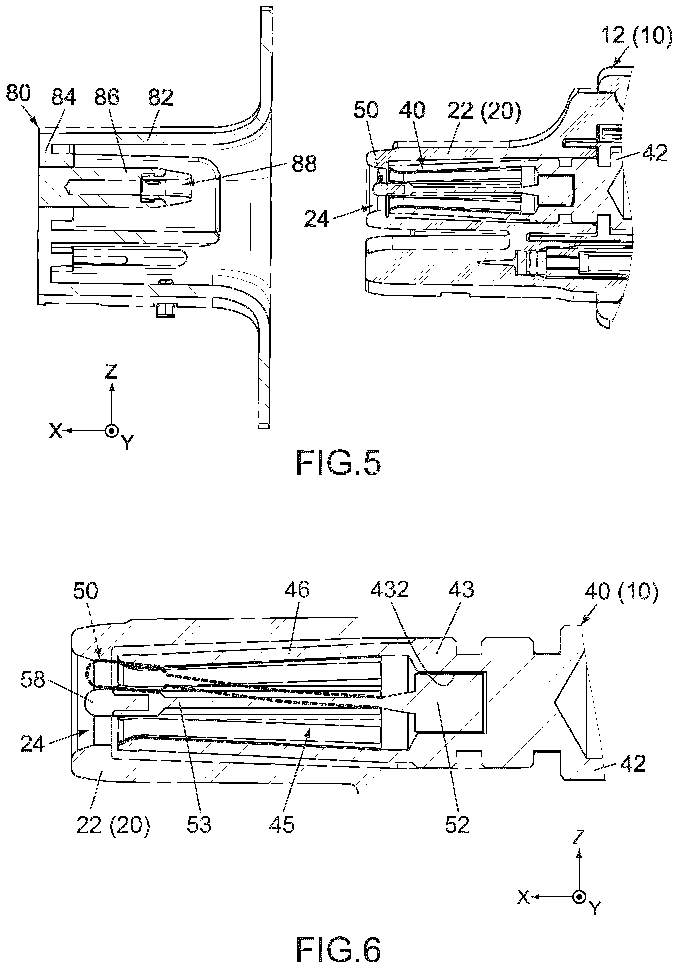

Referring to Figs. 4 and 5, the mating connector 80 comprises a mating housing 82 made of insulator and two mating contacts 86 each made of conductor. Each of the mating contacts 86 is a pin. Each of the mating contacts 86 is held by a rear plate 84 of the mating housing 82 and extends rearward from the rear plate 84 along the front-rear direction. The two mating contacts 86 are arranged in a lateral direction perpendicular to the front-rear direction. The lateral direction of the present embodiment is the Y-direction.

The mating connector 80 of the present embodiment comprises the aforementioned members. However, the present invention is not limited thereto. For example, the mating housing 82 may be provided as necessary. The number of the mating contacts 86 may be one, three or more. The mating connector 80 may further comprise another member in addition to the aforementioned members.

As shown in Fig. 5, each of the mating contacts 86 of the present embodiment is formed of two members which are combined together in the front-rear direction. Each of the mating contacts 86 is formed with a hole portion 88. Each of the hole portions 88 is located at the middle of the mating contact 86 in a perpendicular plane (YZ-plane) perpendicular to the front-rear direction. Each of the hole portions 88 extends along the front-rear direction. Each of the hole portions 88 opens rearward while becoming wider in the perpendicular plane. Each of the mating contacts 86 of the present embodiment has the aforementioned structure. However, the present invention is not limited thereto. For example, each of the mating contacts 86 may be a single member.

Referring to Figs. 1 and 2, the connector 10 has a mating portion 12 configured to be mated with the mating connector 80. The mating portion 12 is located at a front end of the connector 10 in the front-rear direction and is located at an upper part of the connector 10 in an up-down direction perpendicular to both the front-rear direction and the lateral direction. The up-down direction of the present embodiment is the Z-direction. In the present embodiment, "upward" means the positive Z-direction, and "downward" means the negative Z-direction.

Referring to Fig. 3, the connector 10 of the present embodiment comprises a housing 20 made of insulator, two contacts 40 and two electric-shock protection pins 50. The contacts 40 and the electric-shock protection pins 50 are provided in the mating portion 12. Each of the contacts 40 is a socket. Referring to Fig. 3 together with Fig. 4, the contacts 40 are provided so as to correspond to the mating contacts 86, respectively. The electric-shock protection pins 50 are provided so as to correspond to the contacts 40, respectively.

The connector 10 of the present embodiment comprises the aforementioned members and the aforementioned portion. However, the present invention is not limited thereto. For example, the number of the contacts 40 may be one, three or more. The number of the electric-shock protection pins 50 may be one, three or more. The connector 10 may further comprise another member and another portion in addition to the aforementioned members and the aforementioned portion.

Referring to Figs. 3 and 5, the mating portion 12 of the present embodiment is provided with two wall portions 22 which correspond to the contacts 40, respectively. Each of the wall portions 22 is a part of the housing 20. Thus, the housing 20 has the wall portions 22. Each of the wall portions 22 has a cylindrical shape and projects forward. Each of the wall portions 22 is formed with an accommodate portion 24 which is a cylindrical space located inside the wall portion 22. Thus, the housing 20 is formed with two of the accommodate portions 24. Each of the accommodate portions 24 opens forward. Each of the wall portions 22 is located around the accommodate portion 24 in the perpendicular plane (YZ-plane). Each of the wall portions 22 of the present embodiment encloses the accommodate portion 24 with no gap in the perpendicular plane.

The mating portion 12 of the housing 20 of the present embodiment has the aforementioned structure. However, the present invention is not limited thereto. The structure of the mating portion 12 can be modified as necessary.

Hereafter, explanation will be made about one of the contacts 40. The explanation described below is applicable to each of the contacts 40.

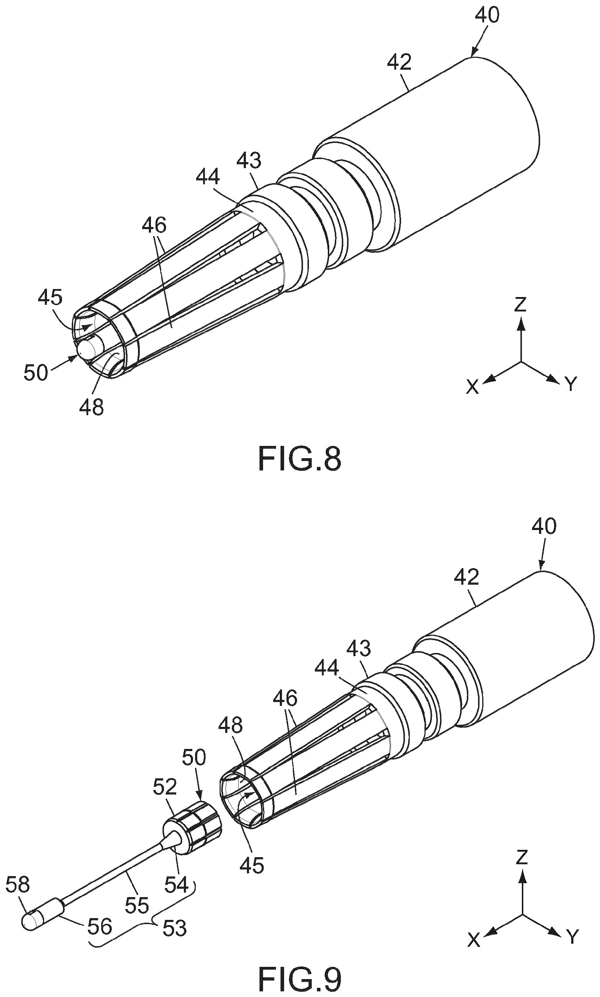

Referring to Fig. 8, the contact 40 of the present embodiment is a single member made of metal. The contact 40 of the present embodiment has a cable connection portion 42, a holding portion 43, a coupling portion 44 and a plurality of spring pieces 46. Each of the cable connection portion 42 and the holding portion 43 has a cylindrical outline. The coupling portion 44 has a cylindrical shape.

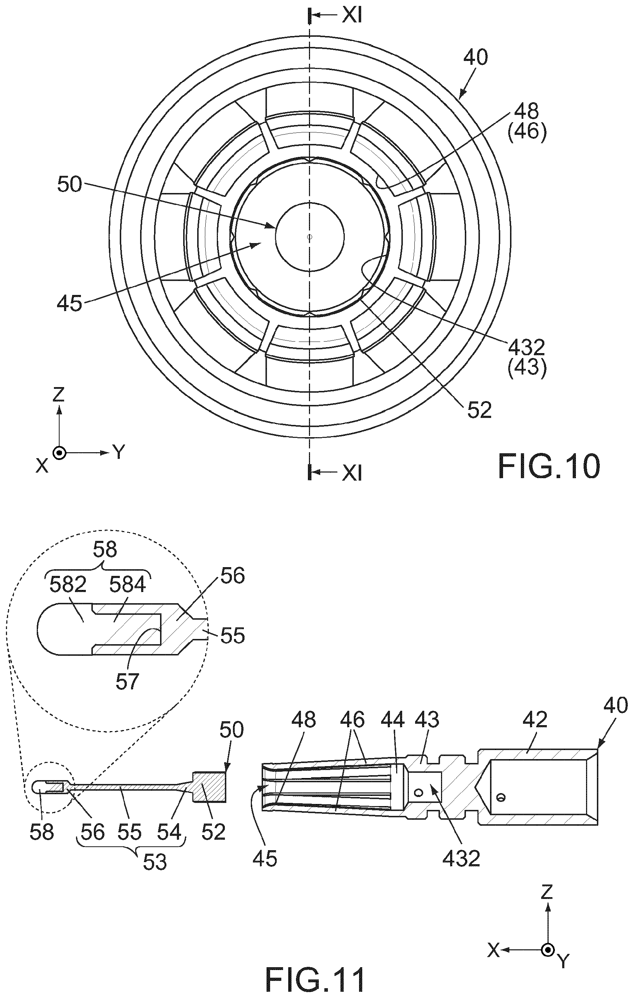

Referring to Fig. 11, the cable connection portion 42 is located at a rear part of the contact 40 and is configured to be connected to a wire (not shown) of the cable 70 (see Fig. 1). The holding portion 43 is located forward of the cable connection portion 42. The holding portion 43 is formed with a cylindrical holding hole 432 located therein. The coupling portion 44 is located forward of the holding portion 43. Each of the spring pieces 46 is connected to a front edge of the coupling portion 44 and extends forward from the coupling portion 44. Thus, the coupling portion 44 couples the spring pieces 46 together. Each of the spring pieces 46 is a cantilever which extends from the coupling portion 44. According to this structure, each of the spring pieces 46 is resiliently deformable in the perpendicular plane (YZ-plane) and has a front end which is a free end.

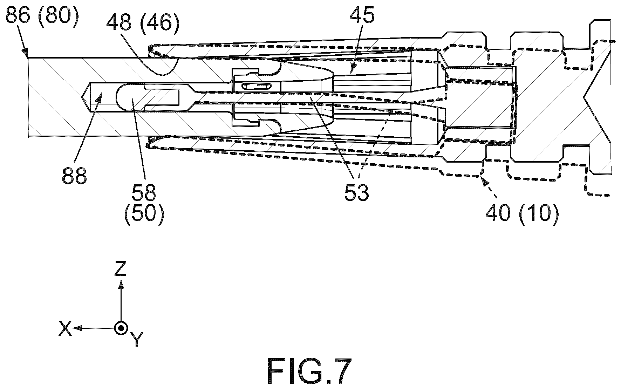

Referring to Figs. 8 and 10, the spring pieces 46 of the present embodiment are arranged in a circle in the perpendicular plane (YZ-plane) at regular intervals. As a result, the contact 40 is formed with a receiving portion 45. The receiving portion 45 of the present embodiment is a space which is enclosed by the coupling portion 44 and eight of the spring pieces 46 in the perpendicular plane. The receiving portion 45 extends along the front-rear direction and opens forward. The receiving portion 45 has volume which can receive one finger. Referring to Fig. 7, the receiving portion 45 is configured to receive the mating contact 86 along the front-rear direction when the connector 10 is mated with the mating connector 80.

Referring to Figs. 8 and 10, each of the spring pieces 46 has a contact portion 48. Thus, the contact 40 of the present embodiment has a plurality of the contact portions 48. The contact portions 48 are located at positions same as each other in the front-rear direction. The contact portions 48 are arranged in a circle in the perpendicular plane (YZ-plane) at regular intervals and protrude inward in the perpendicular plane.

Referring to Fig. 7, each of the spring pieces 46 is resiliently deformed in the perpendicular plane (YZ-plane) under the mated state. The thus-deformed spring pieces 46 press the mating contact 86 which is surrounded by the spring pieces 46, and thereby the contact portions 48 are brought into contact with the mating contact 86 with a sufficient contact force. As a result, the charging device (not shown) connected to the connector 10 is electrically connected with the mating connector 80, and a large current flows through the contact 40.

The contact 40 of the present embodiment is a so-called slotted terminal which has the structure described above. However, the present invention is not limited thereto. The structure of the contact 40 can be modified as necessary, provided that the contact 40 is formed with the receiving portion 45.

Referring to Figs. 5 and 6, the contact 40 is accommodated in the accommodate portion 24 and is held by the housing 20. The contact 40 is fixed to the housing 20 so as not to be unmovable relative to the housing 20. In other words, the contact 40 is moved in accordance with a movement of the housing 20.

According to the present embodiment, the contact 40 is wholly located in the housing 20. In detail, the most part of the contact 40 excluding the cable connection portion 42 is completely accommodated in the accommodate portion 24 and is completely covered by the wall portion 22 in the perpendicular plane (YZ-plane). The housing 20 is formed with a gap which is located between the contact 40 and the wall portion 22 in the perpendicular plane. However, a front end of the wall portion 22 protrudes inward in the perpendicular plane and covers the gap from the front. Accordingly, no finger can touch the outer surface of the contact 40.

The contact 40 of the present embodiment is arranged in the housing 20 as described above. However, the present invention is not limited thereto. For example, the contact 40 and the wall portion 22 may be in close contact with each other in the perpendicular plane (YZ-plane) with no gap formed therebetween.

Hereafter, explanation will be made about one of the electric-shock protection pins 50. The explanation described below is applicable to each of the electric-shock protection pins 50.

Referring to Figs. 9 and 11, the electric-shock protection pin 50 of the present embodiment has a held portion 52 made of metal, a support portion 53 made of metal and an end portion 58 made of insulator. The held portion 52 and the support portion 53 of the present embodiment are formed integrally with each other. The held portion 52 is located at a rear end of the electric-shock protection pin 50 and has a cylindrical shape. The support portion 53 is connected to a front end of the held portion 52 and extends forward from the held portion 52. The end portion 58 is located at a front end of the electric-shock protection pin 50 and is supported by the support portion 53.

Referring to Figs. 6 and 10, the held portion 52 of the present embodiment is press-fit into the holding hole 432 of the contact 40 which is fixed to the housing 20. As a result, the held portion 52 is fixed to the housing 20 so as to be unmovable relative to the housing 20. In other words, the held portion 52 is moved in accordance with a movement of the housing 20. The held portion 52 of the present embodiment is directly fixed to the contact 40. However, the present invention is not limited thereto. For example, the held portion 52 may be indirectly fixed to the contact 40. More specifically, the held portion 52 may be fixed to a holder (not shown) other than the contact 40. In this instance, the holder may be fixed to the contact 40.

Referring to Fig. 6, the support portion 53 is resiliently deformable. In detail, the support portion 53 is under an initial state and is not substantially deformed resiliently when the electric-shock protection pin 50 receives no force except for the gravity (see the electric-shock protection pin 50 illustrated with solid line in Fig. 6). The support portion 53 is resiliently deformed as illustrated by dashed line when the electric-shock protection pin 50 receives a force.

As shown in Figs. 9 and 11, the support portion 53 of the present embodiment has a rod-like shape which extends along the front-rear direction. In detail, the support portion 53 has a round rod shape which extends along the front-rear direction. The thus-formed support portion 53 is resiliently deformable equally in any direction on the perpendicular plane (YZ-plane). However, the present invention is not limited thereto. For example, the support portion 53 may have a rectangular rod shape which extends along the front-rear direction or may have a flat-plate shape which extends along the front-rear direction.

The support portion 53 of the present embodiment has a base portion 54, a rear portion 55 and a front portion 56. The base portion 54 has a truncated cone shape and projects forward from a front end surface of the held portion 52. The rear portion 55 has a round rod shape and extends forward from a front end of the base portion 54. The front portion 56 is connected to a front end of the rear portion 55 and is located forward of the rear portion 55. Thus, the rear portion 55 extends rearward from the front portion 56. The front portion 56 supports the end portion 58. The rear portion 55 has a size in the perpendicular plane (YZ-plane) which is smaller than a size of the front portion 56 in the perpendicular plane except for a boundary between the front portion 56 and the rear portion 55. Thus, the rear portion 55 is slimmer than the front portion 56 and is resiliently deformable more easily than the front portion 56.

The support portion 53 of the present embodiment has the aforementioned structure. When a force is applied to the end portion 58, the rear portion 55 is resiliently deformed more easily than any other part of the support portion 53. The end portion 58 is moved in accordance with resilient deformation of the rear portion 55. However, the present invention is not limited thereto. The structure of the support portion 53 can be modified as necessary. For example, the base portion 54 may be a coil spring. The coil spring may have a rear end which is not indirectly fixed to the contact 40 via the held portion 52 but is directly fixed to the contact 40.

The electric-shock protection pin 50 of the present embodiment is made of copper or copper alloy. Thus, the support portion 53 of the electric-shock protection pin 50 is made of metal and is easily deformed resiliently. The contact 40 of the present embodiment is also made of copper or copper alloy. Thus, the held portion 52 of the electric-shock protection pin 50 is made of a type of metal same as that of the holding portion 43 of the contact 40. This structure reduces corrosion which might occurs at a boundary between the electric-shock protection pin 50 and the contact 40. Moreover, the electric-shock protection pin 50 can be made of a type of copper alloy which is softer than that of the contact 40 while the contact 40 can be made of pure copper whose conductivity is higher than that of the electric-shock protection pin 50. However, the present invention is not limited thereto. For example, the support portion 53 of the electric-shock protection pin 50 may be made of a type of metal different from that of the contact 40 or may be made of insulator.

Referring to Fig. 11, the end portion 58 of the present embodiment is made of insulator and has a main portion 582 and a fixed portion 584. The main portion 582 has a cylindrical shape except for its front end. The front end of the main portion 582 has a hemispherical shape projecting forward. The fixed portion 584 projects rearward from the main portion 582. The front portion 56 of the support portion 53 is formed with a fixation hole 57. The end portion 58 is insert-molded so that the fixed portion 584 is embedded in the fixation hole 57. The thus-formed end portion 58 has an insulation surface.

The end portion 58 of the present embodiment has the aforementioned structure. However, the present invention is not limited thereto. For example, the fixed portion 584 may be screwed into the fixation hole 57 to be fixed to an inner surface of the fixation hole 57. The front portion 56 of the support portion 53 may have a pin-like part which projects forward. In this instance, the end portion 58 made of insulator may be attached to the pin-like part so as to cover the pin-like part. Instead, the end portion 58 may be made of metal. In this instance, the surface of the end portion 58 may be coated with an insulation film.

Referring to Fig. 6 together with Fig. 10, the support portion 53 is located in the receiving portion 45 of the corresponding contact 40. The support portion 53 of the present embodiment is located at the center of the receiving portion 45 in the perpendicular plane (YZ-plane) under the initial state. The support portion 53 of the present embodiment is completely located in the receiving portion 45 except for a front end of the front portion 56. The end portion 58 is located beyond a front end of the contact 40 in the front-rear direction. In other words, the end portion 58 is located outside the receiving portion 45. However, the present invention is not limited thereto. For example, the support portion 53 including the front end of the front portion 56 may be completely located in the receiving portion 45.

The end portion 58 which is arranged as described above prevents insertion of a finger into the receiving portion 45. Thus, no finger can touch any metal part which is located in or in the vicinity of the receiving portion 45. The present embodiment prevents an electric-shock which might be caused when a finger is brought into contact with the contact 40.

Referring to Fig. 7, the support portion 53 and the end portion 58 are received in the hole portion 88 of the mating contact 86 under the mated state. The mating contact 86 can be inserted into the receiving portion 45 while the support portion 53 and the end portion 58 are received in the hole portion 88. The support portion 53 and the end portion 58 of the present embodiment can be easily inserted into the hole portion 88 because they extend like a round rod as a whole. The end portion 58 which has a hemispherical front end can be smoothly inserted into the hole portion 88 which is widened rearward. The end portion 58 received in the hole portion 88 cannot be substantially moved relative to the mating contact 86.

The electric-shock protection pin 50 of the present embodiment has the aforementioned structure and is arranged as described above. However, the present invention is not limited thereto. The structure and the arrangement of the electric-shock protection pin 50 can be modified as necessary.

Hereafter, further specific explanation will be made about the structure of the electric-shock protection pin 50 of the present embodiment.

Referring to Fig. 6, under the initial sate where the support portion 53 is not resiliently deformed, the end portion 58 of the electric-shock protection pin 50 is located at a predetermined position (see the electric-shock protection pin 50 illustrated with solid line in Fig. 6) and is apart from the contact 40 in the perpendicular plane (YZ-plane). The end portion 58 is moved from the predetermined position in the perpendicular plane in accordance with resilient deformation of the support portion 53 (see the electric-shock protection pin 50 illustrated with dashed line in Fig. 6). The end portion 58 moved from the predetermined position returns to the predetermined position in accordance with a return of the support portion 53 to the initial state. Thus, according to the electric-shock protection pin 50 of the present embodiment, when the end portion 58 is moved in a direction perpendicular to the front-rear direction, the support portion 53 is not plastically deformed but makes the end portion 58 return to the predetermined position by using a restoring force caused by its resilient deformation.

Referring to Fig. 7 together with Fig. 2, the connector 10 is moved so as to be inclined with the front-rear direction when the connector 10 receives a force along a direction intersecting with the mating direction (front-rear direction) under a state where the electric-shock protection pin 50 is received in the hole portion 88 of the mating contact 86. For example, the connector 10 under the mated state may be detached from the mating connector 80 while being vertically inclined about the mating portion 12. The existing electric-shock protection pin might be plastically deformed into a bent shape during this operation.

In contrast, according to the present embodiment, the electric-shock protection pin 50 is not plastically deformed but is resiliently deformed, for example, even when the connector 10 is inclined by a force applied to the connector 10 along a direction intersecting with the front-rear direction (mating direction) under the mated state. Thus, the present embodiment provides the connector 10 comprising the electric-shock protection pin 50 which is hardly deformed plastically even when the connector 10 receives a force along a direction intersecting with the mating direction.

Referring to Fig. 6, the electric-shock protection pin 50 of the present embodiment is resiliently deformable sufficiently. More specifically, according to the electric-shock protection pin 50 of the present embodiment, when a force which has moved the support portion 53 to bring it contact with the wall portion 22 is removed, the support portion 53 makes the end portion 58 return to the predetermined position. However, the present invention is not limited thereto. The electric-shock protection pin 50 should be resiliently deformable so that the electric-shock protection pin 50 can follow an assumed inclination of the connector 10.

As shown in Fig. 11, according to the electric-shock protection pin 50 of the present embodiment, a rear part of the front portion 56 of the support portion 53 extends rearward to the rear portion 55 while being tapered. Referring to Fig. 7, according to this structure, the support portion 53 and the end portion 58 will not be caught by a wall surface of the hole portion 88 even when the connector 10 is inclined during an operation in which the connector 10 is detached from the mating connector 80. Accordingly, the support portion 53 and the end portion 58 can be smoothly removed from the hole portion 88 with no problem. However, the present invention is not limited thereto. For example, the end portion 58 and the support portion 53 may have sizes in the perpendicular plane (YZ-plane) same as each other.

The present embodiment can be further variously modified in addition to the already described various modifications.

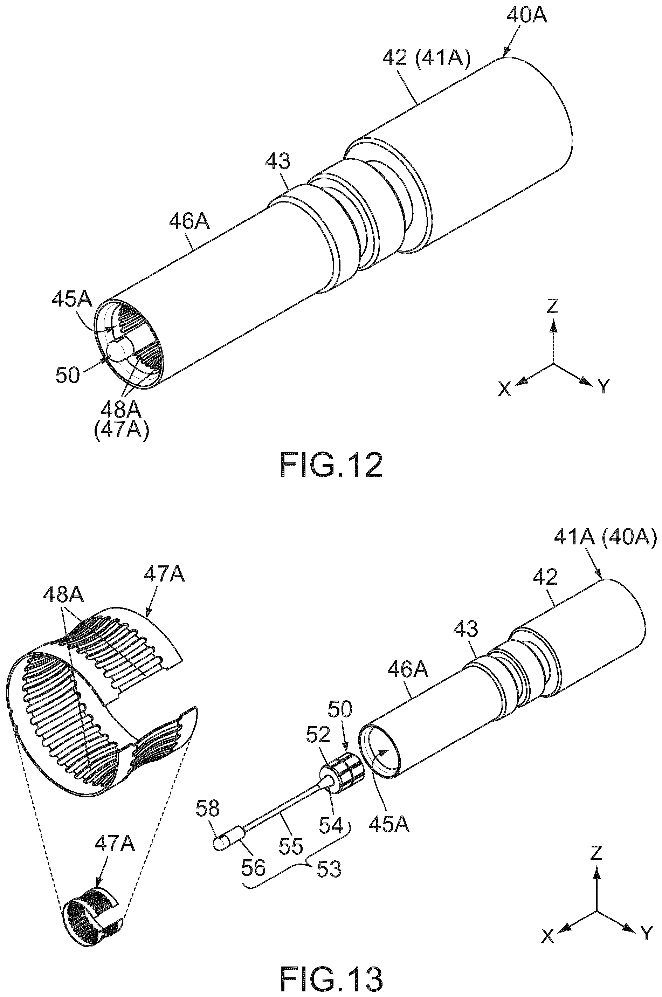

For example, referring to Fig. 12 together with Fig. 5, the connector 10 may comprise a contact 40A instead of the contact 40. The contact 40A holds the electric-shock protection pin 50 similarly to the contact 40. The contact 40A comprises a main member 41A and an additional member 47A which are formed separately from each other.

Comparing Fig. 12 with Fig. 8, the main member 41A comprises the cable connection portion 42 and the holding portion 43 same as those of the contact 40. Moreover, the main member 41A has a cylindrical portion 46A instead of the coupling portion 44 and the spring pieces 46 of the contact 40. The main member 41A has a structure similar to that of the contact 40 except for the aforementioned differences. For example, the cylindrical portion 46A is formed with a receiving portion 45A located therein.

Referring to Figs. 12 to 15, the additional member 47A is formed of a thin single metal plate and has a cylindrical shape with slits formed therein. The additional member 47A is formed with a plurality of contact portions 48A. Thus, the contact 40A has a plurality of the contact portions 48A. The contact portions 48A are arranged in a circle. Each of the contact portions 48A extends along the front-rear direction and protrudes inward in the perpendicular plane (YZ-plane). The additional member 47A is fixed on an inner surface of the receiving portion 45A of the contact 40A and extends along an inner wall surface of the cylindrical portion 46A in the perpendicular plane. Each of the contact portions 48A is arranged on an imaginary circular ring in the perpendicular plane and protrudes toward the center of the receiving portion 45A. In other words, the contact portions 48A are arranged in a louver arrangement.

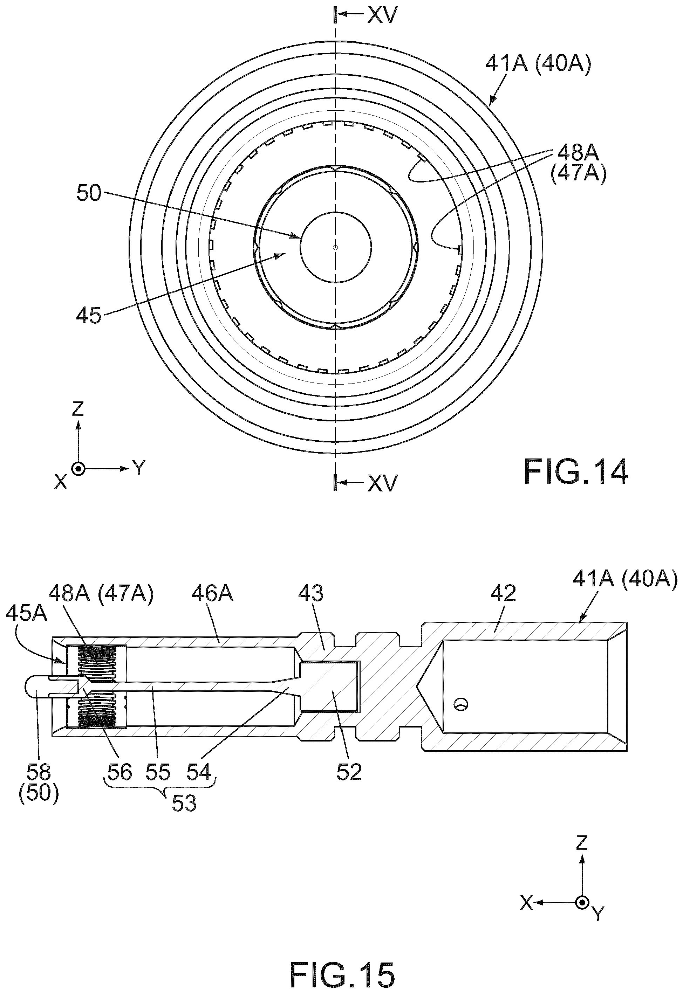

Referring to Fig. 15 together with Fig. 7, the present modification also provides the connector 10 comprising the electric-shock protection pin 50 which is hardly deformed plastically even when the connector 10 receives a force along a direction intersecting with the mating direction.

## Claims

1. A connector mateable with a mating connector (80), which is located forward of the connector (10), along a front-rear direction, the mating connector (80) comprising a mating contact (86), wherein:
the connector (10) comprises a housing (20), a contact (40, 40A) and an electric-shock protection pin (50);
the housing (20) is formed with an accommodation portion;
the accommodation portion opens forward;
the contact (40, 40A) is accommodated in the accommodation portion and is held by the housing (20);
the contact (40, 40A) is formed with a receiving portion (45, 45A);
the receiving portion (45, 45A) is configured to receive the mating contact (86) along the front-rear direction when the connector (10) is mated with the mating connector (80);
the electric-shock protection pin (50) has a support portion (53) and an end portion (58);
the support portion (53) is resiliently deformable and is located in the receiving portion (45, 45A);
the end portion (58) is located at a front end of the electric-shock protection pin (50) and is supported by the support portion (53);
the end portion (58) has an insulation surface;
under an initial sate where the support portion (53) is not resiliently deformed, the end portion (58) is located at a predetermined position and is apart from the contact (40, 40A) in a perpendicular plane perpendicular to the front-rear direction;
the end portion (58) is moved from the predetermined position in the perpendicular plane in accordance with resilient deformation of the support portion (53); and
**characterized in that**,
the end portion (58) moved from the predetermined position returns to the predetermined position in accordance with a return of the support portion (53) to the initial state such that the support portion is not plastically deformed but makes the end portion return to the predetermined position by using the restoring force caused by its resilient deformation.

2. The connector (10) as recited in claim 1, wherein:
the housing (20) has a wall portion (22);
the wall portion (22) is located around the accommodation portion in the perpendicular plane; and
when a force which has moved the support portion (53) to bring it contact (40, 40A) with the wall portion (22) is removed, the support portion (53) makes the end portion return to the predetermined position.

3. The connector (10) as recited in claim 1 or 2, wherein the support portion (53) of the electric-shock protection pin (50) has a rod-like shape which extends along the front-rear direction.

4. The connector (10) as recited in one of claims 1 to 3, wherein:
the contact (40, 40A) has a plurality of spring pieces (46) and a coupling portion (44);
the coupling portion (44) couples the spring pieces (46) together; and
each of the spring pieces (46) is a cantilever which extends from the coupling portion (44).

5. The connector (10) as recited in one of claims 1 to 3, wherein:
the contact (40, 40A) has a plurality of contact portions (48, 48A); and
the contact portions (48, 48A) are arranged in a louver arrangement.

6. The connector (10) as recited in one of claims 1 to 5, wherein:
the support portion (53) of the electric-shock protection pin (50) has a front portion (56) and a rear portion (55);
the front portion (56) supports the end portion (58);
the rear portion (55) extends rearward from the front portion (56); and
the rear portion (55) is slimmer than the front portion (56) and is resiliently deformable more easily than the front portion (56).

7. The connector (10) as recited in one of claims 1 to 6, wherein the support portion (53) of the electric-shock protection pin (50) is made of metal.

## Patentansprüche

1. Ein Steckverbinder, der mit einem Gegensteckverbinder (80) zusammensteckbar ist, der sich in Längsrichtung vor dem Steckverbinder (10) befindet, wobei der Gegensteckverbinder (80) einen Gegenkontakt (86) umfasst, wobei:
der Steckverbinder (10) ein Gehäuse (20), einen Kontakt (40, 40A) und einen Schutzstift (50) gegen Stromschläge umfasst;
das Gehäuse (20) mit einem Aufnahmeabschnitt versehen ist;
der Aufnahmeabschnitt sich nach vorne öffnet;
der Kontakt (40, 40A) im Aufnahmeabschnitt aufgenommen ist und vom Gehäuse (20) gehalten ist;
der Kontakt (40, 40A) mit einem Empfangsabschnitt (45, 45A) ausgebildet ist;
der Empfangsabschnitt (45, 45A) so ausgebildet ist, dass er den Gegenkontakt (86) in Längsrichtung empfängt, wenn der Stecker (10) mit dem Gegenstecker (80) verbunden ist;
der Schutzstift (50) gegen Stromschläge einen Stützabschnitt (53) und einen Endabschnitt (58) aufweist;
der Stützabschnitt (53) elastisch verformbar ist und sich im Empfangsabschnitt (45, 45A) befindet;
der Endabschnitt (58) sich am vorderen Ende des Schutzstifts (50) gegen Stromschläge befindet und vom Stützabschnitt (53) gestützt ist;
der Endabschnitt (58) eine Isolierfläche aufweist;
in einem Ausgangszustand, in dem der Stützabschnitt (53) nicht elastisch verformt ist, der Endabschnitt (58) sich an einer vorbestimmten Position befindet und in einer senkrechten Ebene, die senkrecht zur Längsrichtung ist, vom Kontakt (40, 40A) beabstandet ist;
der Endabschnitt (58) entsprechend der elastischen Verformung des Stützabschnitts (53) aus der vorgegebenen Position in der senkrechten Ebene bewegt wird; und
**dadurch gekennzeichnet, dass**
der Endabschnitt (58), der aus der vorgegebenen Position bewegt wurde, entsprechend der Rückstellung des Stützabschnitts (53) zum Ausgangszustand in die vorgegebene Position zurückkehrt, sodass der Stützabschnitt nicht plastisch verformt ist, sondern den Endabschnitt unter Ausnutzung der durch seine elastische Verformung verursachten Rückstellkraft in die vorgegebene Position zurückführt.

2. Der Steckverbinder (10) nach Anspruch 1, wobei:
das Gehäuse (20) einen Wandabschnitt (22) aufweist;
der Wandabschnitt (22) sich in der senkrechten Ebene um den Aufnahmeabschnitt befindet; und
wenn die Kraft nachlässt, die den Stützabschnitt (53) in Kontakt (40, 40A) mit dem Wandabschnitt (22) gebracht hat, der Stützabschnitt (53) den Endabschnitt in die vorgegebene Position zurückkehren lässt.

3. Der Steckverbinder (10) nach Anspruch 1oder 2, wobei der Stützabschnitt (53) des Schutzstifts (50) gegen Stromschläge eine stabförmige Form aufweist, die sich entlang der Längsachse erstreckt.

4. Der Verbinder (10) gemäß einem der Ansprüche 1 bis 3, wobei:
der Kontakt (40, 40A) mehrere Federelemente (46) und einen Kopplungsabschnitt (44) aufweist.;
der Kopplungsabschnitt (44) die Federelemente (46) miteinander koppelt; und
jedes der Federelemente (46) ein Ausleger ist, der sich vom Kopplungsabschnitt (44) aus erstreckt.

5. Der Verbinder (10) gemäß einem der Ansprüche 1 bis 3, wobei:
der Kontakt (40, 40A) mehrere Kontaktabschnitte (48, 48A) aufweist; und
die Kontaktabschnitte (48, 48A) in einer Lamellenanordnung angeordnet sind.

6. Der Verbinder (10) gemäß einem der Ansprüche 1 bis 5, wobei:
der Stützabschnitt (53) des Schutzstifts (50) gegen Stromschläge einen vorderen Abschnitt (56) und einen hinteren Abschnitt (55) aufweist;
der vordere Abschnitt (56) den Endabschnitt (58) stützt;
der hintere Abschnitt (55) sich vom vorderen Abschnitt (56) nach hinten erstreckt; und
der hintere Abschnitt (55) schlanker als der vordere Abschnitt (56) ist und sich leichter elastisch verformen lässt als der vordere Abschnitt (56).

7. Der Verbinder (10) gemäß einem der Ansprüche 1 bis 6, wobei der Stützabschnitt (53) des Schutzstifts (50) gegen Stromschläge aus Metall besteht.

## Revendications

1. Connecteur accouplable avec un connecteur d'accouplement (80), qui est situé à l'avant du connecteur (10), le long d'une direction avant-arrière, le connecteur d'accouplement (80) comprenant un contact d'accouplement (86), où :
le connecteur (10) comprend un boîtier (20), un contact (40, 40A) et une épingle de protection contre les chocs électriques (50) ;
le boîtier (20) est formé avec une portion de placement ;
la portion de placement s'ouvre vers l'avant ;
le contact (40, 40A) est placé dans la portion de placement et est maintenu par le boîtier (20) ;
le contact (40, 40A) est formé avec une portion de réception (45, 45A) ;
la portion de réception (45, 45A) est configurée pour recevoir le contact d'accouplement (86) le long de la direction avant-arrière lorsque le connecteur (10) est accouplé avec le connecteur d'accouplement (80) ;
l'épingle de protection contre les chocs électriques (50) a une portion de support (53) et une portion d'extrémité (58) ;
la portion de support (53) est déformable élastiquement et est située dans la portion de réception (45, 45A) ;
la portion d'extrémité (58) est située à une extrémité avant de l'épingle de protection contre les chocs électriques (50) et est supportée par la portion de support (53) ;
la portion d'extrémité (58) a une surface d'isolation ;
dans un état initial où la portion de support (53) n'est pas déformée élastiquement, la portion d'extrémité (58) est située à une position prédéterminée et est espacée du contact (40, 40A) dans un plan perpendiculaire qui est perpendiculaire à la direction avant-arrière ;
la portion d'extrémité (58) est déplacée depuis la position prédéterminée dans le plan perpendiculaire en fonction de la déformation élastique de la portion de support (53) ; et
**caractérisé en ce que**
la portion d'extrémité (58) déplacée depuis la position prédéterminée revient à la position prédéterminée en fonction d'un retour de la portion de support (53) à l'état initial de telle sorte que la portion de support n'est pas déformée plastiquement mais amène la portion d'extrémité à revenir à la position prédéterminée en utilisant la force de rappel provoquée par sa déformation élastique.

2. Connecteur (10) selon la revendication 1, où :
le boîtier (20) a une portion de paroi (22) ;
la portion de paroi (22) est située autour de la portion de placement dans le plan perpendiculaire ; et
lorsqu'une force qui a déplacé la portion de support (53) pour l'amener en contact (40, 40A) avec la portion de paroi (22) est supprimée, la portion de support (53) amène la portion d'extrémité à revenir à la position prédéterminée.

3. Connecteur (10) selon la revendication 1 ou 2, où la portion de support (53) de l'épingle de protection contre les chocs électriques (50) a la forme d'une tige qui s'étend le long de la direction avant-arrière.

4. Connecteur (10) selon l'une des revendications 1 à 3, où :
le contact (40, 40A) a une pluralité de pièces de ressort (46) et une portion d'accouplement (44) ;
la portion d'accouplement (44) accouple les pièces de ressort (46) ensemble ; et
chacune des pièces de ressort (46) est un porte-à-faux qui s'étend depuis la portion d'accouplement (44).

5. Connecteur (10) selon l'une des revendications 1 à 3, où :
le contact (40, 40A) a une pluralité de portions de contact (48, 48A) ; et
les portions de contact (48, 48A) sont agencées dans un agencement de persienne.

6. Connecteur (10) selon l'une des revendications 1 à 5, où :
la portion de support (53) de l'épingle de protection contre les chocs électriques (50) a une portion avant (56) et une portion arrière (55) ;
la portion avant (56) supporte la portion d'extrémité (58) ;
la portion arrière (55) s'étend vers l'arrière depuis la portion avant (56) ; et
la portion arrière (55) est plus mince que la portion avant (56) et est déformable élastiquement plus facilement que la portion avant (56).

7. Connecteur (10) selon l'une des revendications 1 à 6, où la portion de support (53) de l'épingle de protection contre les chocs électriques (50) est en métal.
